# EUROPÄISCHE PATENTSCHRIFT

(11) **EP 0 398 046 B1**
(45) Veröffentlichungstag und Bekanntmachung des Hinweises auf die Patenterteilung: **06.12.1995**
(21) Anmeldenummer: 90107809.7
(22) Anmeldetag: 25.04.1990
(51) Int. Cl.: B28B 1/00, B28B 11/12, F16F 1/02, F16F 1/04

(54) **Verfahren zur Herstellung eines flexiblen keramischen Elements sowie flexibles keramisches Element**
Process for making a flexible ceramic element and flexible ceramic element obtained thereby
Procédé pour la fabrication d'un élément flexible en matière céramique et élément flexible en matière céramique ainsi obtenu

(30) Priorität: 15.05.1989 US 353323
(43) Veröffentlichungstag der Anmeldung: 22.11.1990
(73) Patentinhaber: ZIRCOA, INC., Solon Ohio 44139 (US)
(72) Erfinder: Searle, Ralph, Solon, Ohio 33139 (US); Leistner, Hans, Dr., D-6507 Ingelheim (DE); Brückner, Raimund, D-6272 Engenhahn (DE); Mentesh, Ibrahim, Ohio 44121 (US); Levadnuk, Edward, Raleigh, North Carolina 27615 (US)
(74) Vertreter: Brückner, Raimund, Dipl.-Ing.

(56) Entgegenhaltungen:
- EP-A- 0 220 769
- WO-A-88/01723
- FR-A- 1 248 541
- FR-A- 2 182 597
- US-A- 4 735 638
- US-A- 4 742 030
- WORLD PATENT INDEX LATEST AN 86-153587, Woche 8624, Derwent Publications Ltd., London, GB & JP- A-61 088 033 (KYOCERA CORP.) 6. Mai 1986
- PATENT ABSTRACTS OF JAPAN, vol. 13, no. 194 (M-823)(3542) 10. Mai 1989 & JP-A-1 21 233 (MEIWA KOGYO K.K. ) 24. Januar 1989
- PATENT ABSTRACTS OF JAPAN, vol. 13, no. 177 (M-818)(3525) 26. April 1989 & JP-A-1 6 537 (IBIDEN CO LTD ) 11. Januar 1989

## Beschreibung

Die Erfindung bezieht sich auf ein Verfahren zur Herstellung eines flexiblen keramischen Elements nach dem Oberbegriff des Anspruchs 1 sowie auf ein flexibles, keramisches Element nach dem Oberbegriff des Anspruchs 9.

Solche keramischen Element sollen in einer Umgebung hoher Temperaturen, von z.B. über 1.000 °C und/oder in korrosiver Umgebung benutzbar sein.

Wenn flexible Elemente, wie Federn, Bälge oder flexible Wellen eingesetzt werden mußten, war es bisher notwendig, diese aus Metall zu bilden, um die notwendigen Eigenschaften von Flexibilität und Elastizität zur Verfügung zu stellen. Solche Elemente aus Metall sind jedoch für den Einsatz in einer Hochtemperaturumgebung und/oder in einer korrosiven Atmosphäre oder in korrosiven Medien nicht sehr geeignet, da Metalle solchen Umgebungen oder Atmosphären nicht ohne weiteres standhalten und unter solchen Bedingungen einem wesentlichen Verschleiß ausgesetzt sind.

Aus der US-A 4 742 030 ist ein gesintertes Zirkonoxid-Material und ein Verfahren zu dessen Herstellung bekannt. Es soll beispielsweise zur Herstellung einer Feder oder einer Schraubenfeder verwendet werden und einen Elastizitätsmodul von 200.000 MPa und eine Biegefestigkeit von 1.000 MPa haben können. Ein Verfahren zur Herstellung von flexiblen keramischen Elementen ist darin nicht angegeben.

Aus der EP-A 0 220 769 ist ein Verfahren zur Herstellung einer zylindrischen Feder für die Anwendung bei hohen Temperaturen bekannt. Die Feder soll aus Quarz, Bornitrid oder Graphit bestehen und z.B. aus einem zylindrischen Rohr, das mit im Abstand voneinander angeordneten Aussparungen mit einer Säge versehen wird, hergestellt werden. Die vorgeschlagenen Materialien eignen sich jedoch nur in sehr beschränktem Maße für die Herstellung einer solchen Feder, sei es, was die gewünschte Temperaturwiderstandsfähigkeit und Korrosionsbeständigkeit, sei es, was die erzielbare Flexibilität anbelangt.

Aus der JP-A 62-160 743 ist ein Verfahren zur Herstellung einer keramischen Spiralfeder bekannt. Um eine Verformung der Feder vor dem Brennen zu verhindern, sind die Windungen der Spiralfeder zunächst durch dünne Verbindungsstücke fixiert, die nach dem Brennen weggeschliffen werden.

Hiervon ausgehend ist es Aufgabe der Erfindung, ein Verfahren zur Herstellung eines flexiblen Elements und ein flexibles Element zur Verfügung zu stellen, welches einer Hochtemperaturumgebung oder einer korrosiven Atmosphäre oder korrosiven Medien besser standhält und dessen Flexibilität besser an die gegebenen Verhältnisse anpaßbar ist.

Diese Aufgabe wird erfindungsgemäß mit den Merkmalen des Anspruchs 1 (Verfahren) bzw. den Merkmalen des Anspruchs 9 (Element) gelöst.

Dem Element, das erfindungsgemäß aus keramischem Material geformt ist, kann auf einfache Weise jeweils der gewünschte Grad an Flexibilität gegeben werden. Als Ergebnis der besonderen Materialauswahl und Fertigungsmethode ist es möglich, eine Element, wie eine Feder, einen Balg oder eine flexible Welle, mit einem unterschiedlichen Grad an Flexibilität zu bilden, der für verschiedene Anwendungen notwendig ist, während zugleich gewährleistet wird, daß das flexible Element einer Hochtemperaturumgebung und/oder einer korrosiven Atmosphäre oder korrosiven Medien standhält. Auf diese Weise kann das flexible Element hohen Temperaturen, beispielsweise über 1.000°C, und korrosiven Atmosphären oder Medien ohne Schädigung oder Verformung ausgesetzt werden. Es ist überraschend, daß trotz des verwendeten keramischen Materials und trotz der angewendeten Herstellungsweise gemäß der Erfindung dem Element der jeweils gewünschte Grad an Flexibilität und Elastizität gegeben werden kann, der zum Gebrauch von einem solchen Element notwendig ist, und daß dennoch die Beanspruchung durch hohe Temperaturen und/oder korrosive Medien unschädlich ist.

Das keramische Material wird eingesetzt, um zunächst ein rohrförmiges Bauteil zu formen, wobei solch ein geformtes Teil vorzugsweise vollständig gebrannt ist. Das Bauteil wird dann mit einer Vielzahl von umlaufenden Nuten versehen, um einen gewünschten Grad an Biegsamkeit oder Flexibilität zu schaffen. Die Nuten können z.B. mittels Schneiden, Sägen oder Fräsen etc. in dem geformten rohrförmigen Bauteil angebracht werden.

Die Nuten können dem rohrförmigen Bauteil in Abhängigkeit von dem benötigten Grad und der benötigten Richtung oder Art an Flexibilität und/oder Elastizität die endgültige Gestalt geben. Die eingesetzten keramischen Materialien können in Abhängigkeit von der beabsichtigten Anwendung des Elements ausgewählt werden.

Weitere Einzelheiten der Erfindung werden nachfolgend anhand der Zeichnung näher erläutert.

Es zeigen:
- Figur 1: einen Querschnitt gemäß Linie III-III in Figur 3 eines Balges, der aus einem rohrförmigen, aus keramischem Material geformten Bauteil gebildet ist;
- Figur 2: einen ähnlichen Querschnitt, jedoch gemäß Linie IV-IV in Figur 3;
- Figur 3: einen Längsschnitt gemäß Linie V-V in Figur 1 und Figur 2.

Das Ausgangsbauteil für das in den Zeichnungen dargestellte Element ist ein vollständig gebranntes geformtes Teil aus keramischem Material, beispielsweise oxid-keramischem Material, und insbesondere teilweise oder vollständig stabilisiertem Zirkonoxid. Das keramische Material weist ein Elastizitätsmodul von 150.000 bis 200.000 MPa, vorzugsweise 170.000 bis 180.000 MPa, auf. Die Biegefestigkeit des vollständig gebrannten keramischen Materials ist größer als 400 MPa, vorzugsweise 1.000 bis 1.400 MPa.

Um solch ein vollständig gebranntes und geformtes Teil aus solchem keramischen Material mit der gewünschten Flexibilität und/oder Elastizität auszustatten, ist das geformte Bauteil mit Abschnitten verminderter Dicke versehen, welches detaillierter im folgenden beschrieben wird. Solche Abschnitte verminderter Dicke können mit verschiedenen mechanischen Vorgängen, wie Schneiden, Sägen oder Fräsen, hergestellt werden. Die Lage, Größe und Anzahl der Abschnitte verminderter dicke werden entsprechend dem gewünschten Grad der in dem speziellen Element zu verwirklichenden Flexibilität und/oder Elastizität ausgewählt.

Ein bevorzugtes keramisches Material ist ein teilweise oder vollständig stabilisiertes Zirkonoxid (ZrO₂). Durch Stabilisieren des Zirkonoxids ist es möglich, die Sprödigkeit oder Schrumpfung bei Temperaturen über 1.000°C zu vermindern. Zur Stabilisierung des Zirkonoxids ist es möglich, Magnesium, Kalzium oder insbesondere Yttrium, oder Mischungen davon zu verwenden, wobei die Quantität des Zusatzes im allgemeinen unter etwa 1 bis 3 Gew.-% liegt.

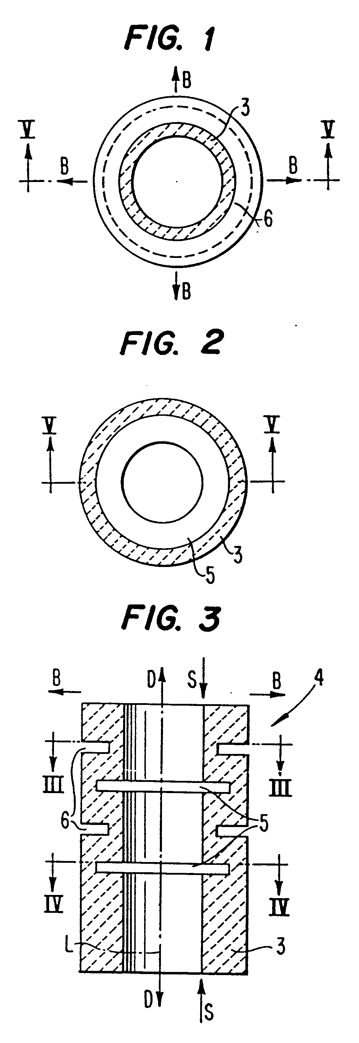

Die Figuren 1 bis 3 zeigen die Ausgestaltung eines flexiblen, als Balg aus einem rohrförmig geformten Bauteil 3 ausgebildeten Elements 4. In den inneren und den äußeren Oberflächen des rohrförmigen Bauteils 3 sind abwechselnd umlaufende Nuten 5 bzw. 6 ausgebildet. Die Nuten 5, 6 erstrecken sich lediglich durch einen Abschnitt der Dicke des rohrförmigen Bauteils 3. Die Nuten 5, 6 wechseln sich in der Richtung der Längsachse L des Elements 4 ab. Die Nuten 5, 6 sind derart dimensioniert und angeordnet, daß der verbleibende Teil des rohrförmigen Bauteils 3 das Element 4 mit einem gewünschten Grad an Flexibilität und Elastizität in der Richtung des Pfeils D und einem gewünschten Grad an Nachgiebigkeit und Elastizität in der Richtung des Pfeils S, sowie einen gewünschten Grad an Flexibilität in der Richtung B senkrecht zu der Längsachse L bildet.

Das Element 4 der Figuren 1 bis 3 ist zur Übertragung von Torsionskräften geeignet. Darüberhinaus ist es nicht notwendig, daß die umlaufenden Nuten 5, 6 entlang der gesamten Längserstreckung des rohrförmigen Bauteils 3 vorgesehen sind. Es ist möglich, geeignet dimensionierte Endabschnitte oder Segmente vorzusehen, die frei von solchen Aschnitten verminderter Dicke sind, z.B. um die Bauteile in oder auf andere Element , wie Halter oder Träger, zu klemmen.

## Patentansprüche

1. Verfahren zur Herstellung eines flexiblen keramischen Elements, welches hochtemperaturbeständig ist und/oder korrosiven Atmosphären oder Medien standhält,
dadurch gekennzeichnet,
daß man ein Bauteil in Gestalt eines Rohres (3) aus einem keramischen Material mit einem Elastizitätsmodul von 150.000 bis 200.000 MPa und einer Biegefestigkeit von mehr als 400 MPa hergestellt, und an diesem Bauteil für den gewünschten Grad an Flexibilität Abschnitte verminderter Dicke in Form einer Vielzahl von umlaufenden Nuten (5, 6), die sich lediglich über einen Teil der Dicke der Wand des Rohres (3) erstrecken, anbringt.

2. Verfahren nach Anspruch 1,
dadurch gekennzeichnet,
daß der Elastizitätsmodul zwischen 170.000 und 180.000 MPa liegt.

3. Verfahren nach Anspruch 1 oder 2,
dadurch gekennzeichnet,
daß die Biegefestigkeit zwischen 1.000 und 1.400 MPa liegt.

4. Verfahren nach einem der Ansprüche 1 bis 3,
dadurch gekennzeichnet.
daß man als keramisches Material ein oxid-keramisches Material, wie teilweise oder vollständig stabilisiertes Zirkonoxid, verwendet.

5. Verfahren nach einem der Ansprüche 1 bis 4,
dadurch gekennzeichnet,
daß man das Bauteil brennt.

6. Verfahren nach einem der Ansprüche 1 bis 5,
dadurch gekennzeichnet,
daß man die Nuten (5, 6) in der inneren und in der äußeren Oberfläche der Wand des Rohres (3) anbringt.

7. Verfahren nach Anspruch 6,
dadurch gekennzeichnet,
daß man die Nuten (5, 6) abwechselnd in der inneren und der äußeren Oberfläche der Wand des Rohres (3) anbringt.

8. Verfahren nach einem der Ansprüche 1 bis 7,
dadurch gekennzeichnet,
daß man einen Endabschnitt des Rohres (3) frei von Nuten (5, 6) hält.

9. Flexibles keramisches Element, welches hochtemperaturbeständig ist und/oder korrosiver Atmosphären oder Medien standhält,
gekennzeichnet durch
ein einstückiges Bauteil in Gestalt eines Rohres (3) aus einem keramischen Material mit einem Elastizitätsmodul von 150.000 bis 200.000 MPa und einer Biegefestigkeit von mehr als 400 MPa, das für den gewünschten Grad an Flexibilität Abschnitte verminderter Dicke in Form einer Vielzahl von umlaufenden Nuten (5, 6), die sich lediglich über einen Teil der Dicke der Wand des Rohres (3) erstrecken, aufweist.

10. Element nach Anspruch 9,
dadurch gekennzeichnet,
daß der Elastizitätsmodul zwischen 170.000 und 180.000 MPa liegt.

11. Element nach Anspruch 9 oder 10,
dadurch gekennzeichnet,
daß die Biegefestigkeit zwischen 1.000 und 1.400 MPa liegt.

12. Element nach einem der Ansprüche 9 bis 11,
dadurch gekennzeichnet,
daß das keramische Material ein oxid-keramisches Material, wie teilweise oder vollständig stabilisiertes Zirkonoxid, ist.

13. Element nach einem der Ansprüche 9 bis 12,
dadurch gekennzeichnet,
daß das Bauteil gebrannt ist.

14. Element nach einem der Ansprüche 9 bis 13,
dadurch gekennzeichnet,
daß die Nuten (5, 6) in der inneren und der äußeren Oberfläche der Wand des Rohres (3) eingeformt sind.

15. Element nach Anspruch 14,
dadurch gekennzeichnet,
daß die Nuten (5, 6) abwechselnd in der inneren und der äußeren Oberfläche geformt sind.

16. Element nach einem der Ansprüche 9 bis 15,
dadurch gekennzeichnet,
daß zumindest ein Endabschnitt des Rohres (3) frei von Nuten ist.

## Claims

1. Method of manufacturing a flexible ceramic element which is high temperature resistant and/or withstands corrosive atmospheres or media, characterised in that a component in the form of a tube (3) is manufactured from a ceramic material with a modulus of elasticity of 150,000 to 200,00MPa and a bending strength of more than 400MPa and sections of reduced thickness in the form of a plurality of peripheral grooves (5,6), which extend merely over a portion of the thickness of the wall of the tube (3), are applied to this component for the desired degree of flexibility.

2. Method as claimed in claim 1, characterised in that the modulus of elasticity is between 170,000 to 180,000MPa.

3. Method as claimed in claim 1 or 2, characterised in that the bending strength is between 1000 and 1400MPa.

4. Method as claimed in one of claims 1 to 3, characterised in that an oxide ceramic material, such as partially or completely stabilised zirconium oxide, is used as the ceramic material.

5. Method as claimed in one of claims 1 to 4, characterised in that the component is fired.

6. Method as claimed in one of claims 1 to 5, characterised in that the grooves (5,6) are applied in the inner and in the outer surface of the wall of the tube (3).

7. Method as claimed in claim 6, characterised in that the grooves (5,6) are applied alternately in the inner and the outer surface of the wall of the tube (3).

8. Method as claimed in one of claims 1 to 7, characterised in that an end section of the tube (3) is kept free of grooves (5,6).

9. Flexible ceramic element which is high temperature resistant and/or withstands corrosive atmospheres or media, characterised by an integral component in the form of a tube (3) of a ceramic material with a modulus of elasticity of 150,000 to 200,000MPa and a bending strength of more than 400MPa which has sections of reduced thickness in the form of a plurality of peripheral grooves (5,6), which extend merely over a portion of the thickness of the wall of the tube (3), for the desired degree of flexibility.

10. Element as claimed in claim 9, characterised in that the modulus of elasticity is between 170,000 and 180,000MPa.

11. Element as claimed in claim 9 or 10, characterised in that the bending strength is between 1000 and 1400MPa.

12. Element as claimed in one of claims 9 to 11, characterised in that the ceramic material is an oxide ceramic material, such as partially or completely stabilised zirconium oxide.

13. Element as claimed in one of claims 9 to 12, characterised in that the component is fired.

14. Element as claimed in one of claims 9 to 13, characterised in that the grooves (5,6) are formed in the inner and the outer surface of the wall of the tube (3).

15. Element as claimed in claim 14, characterised in that the grooves (5,6) are formed alternately in the inner and the outer surface.

16. Element as claimed in one of claims 9 to 15, characterised in that at least an end section of the tube (3) is free of grooves.

## Revendications

1. Procédé de fabrication d'un élément céramique flexible qui résiste aux températures élevées et/ou à des atmosphères ou fluides corrosifs,
**caractérisé par le fait**
qu'on fabrique une pièce sous la forme d'un tuyau (3) en matière céramique avec un module d'élasticité de 150.000 à 200.000 MPa et une résistance à la flexion de plus de 400 MPa et qu'on ménage sur cette pièce, selon le degré désiré de flexibilité, des sections d'épaisseur réduite sous la forme d'une pluralité de gorges (5, 6) qui ne s'étendent que sur une partie de l'épaisseur de la paroi du tuyau (3).

2. Procédé suivant la revendication 1,
**caractérisé par le fait**
que le module d'élasticité est compris entre 170.000 et 180.000 MPa.

3. Procédé suivant la revendication 1 ou 2,
**caractérisé par le fait**
que la résistance à la flexion est comprise entre 1000 et 1400 MPa.

4. Procédé suivant l'une des revendications 1 à 3,
**caractérisé par le fait**
qu'on utilise comme matière céramique une matière céramique à base d'oxyde telle que l'oxyde de zirconium partiellement ou complètement stabilisé.

5. Procédé suivant l'une des revendications 1 à 4,
**caractérisé par le fait**
qu'on cuit la pièce.

6. Procédé suivant l'une des revendications 1 à 5,
**caractérisé par le fait**
qu'on ménage les gorges (5, 6) dans la surface intérieure et dans la surface extérieure de la paroi du tuyau (3).

7. Procédé suivant la revendication 6 ,
**caractérisé par le fait**
qu'on ménage les gorges (5, 6) en alternance dans la surface intérieure et la surface extérieure de la paroi du tuyau (3).

8. Procédé suivant l'une des revendications 1 à 7,
**caractérisé par le fait**
qu'on maintient exempt de gorges (5, 6) un tronçon d'extrémité du tuyau (3).

9. Elément céramique flexible qui résiste aux températures élevées et/ou aux atmosphères ou fluides corrosifs,
**caractérisé par**
une pièce monobloc qui se présente sous la forme d'un tuyau (3) en matière céramique avec un module d'élasticité de 150.000 à 200.000 MPa et une résistance à la flexion de plus de 400 MPa et qui, selon le degré désiré de flexibilité, présente des sections d'épaisseur réduite sous la forme d'une pluralité de gorges (5, 6) qui ne s'étendent que sur une partie de l'épaisseur de la paroi du tuyau (3).

10. Elément suivant la revendication 9,
**caractérisé par le fait**
que le module d'élasticité est compris entre 170.000 et 180.000 MPa.

11. Elément suivant la revendication 9 ou 10,
**caractérisé par le fait**
que la résistance à la flexion est comprise entre 1000 et 1400 MPa.

12. Elément suivant l'une des revendications 9 à 11,
**caractérisé par le fait**
que la matière céramique est une matière céramique à base d'oxyde, telle que de l'oxyde de zirconium partiellement ou complètement stabilisé.

13. Elément suivant l'une des revendications 9 à 12,
**caractérisé par le fait**
que la pièce est cuite.

14. Elément suivant l'une des revendications 9 à 13,
**caractérisé par le fait**
que les gorges (5, 6) sont formées dans la surface intérieure et la surface extérieure de la paroi du tuyau (3).

15. Elément suivant la revendication 14,
**caractérisé par le fait**
que les gorges (5, 6) sont formées en alternance dans la surface intérieure et dans la surface extérieure.

16. Elément suivant l'une des revendications 9 à 15,
**caractérisé par le fait**
qu'au moins un tronçon d'extrémité du tuyau (3) est exempt de gorges.
